# EUROPÄISCHE PATENTSCHRIFT

(11) **EP 2 709 836 B1**
(45) Veröffentlichungstag und Bekanntmachung des Hinweises auf die Patenterteilung: **16.11.2016**
(21) Anmeldenummer: 12711840.4
(22) Anmeldetag: 26.03.2012
(51) Int. Cl.: B29D 30/24, B29D 30/20, B29D 30/36

(54) **VERFAHREN ZUR HERSTELLUNG EINES FAHRZEUGREIFENS**
PROCESS FOR MANUFACTURING A VEHICLE TIRE
PROCEDE DE FABRICATION D'UN PNEU DE VÉHICULE

(30) Priorität: 18.05.2011 DE 102011050458
(43) Veröffentlichungstag der Anmeldung: 26.03.2014
(73) Patentinhaber: Continental Reifen Deutschland GmbH, 30165 Hannover (DE)
(72) Erfinder: LINNE, Stefan, 30900 Wedemark (DE); GERINGHAUSEN, Martin, 30890 Barsinghausen (DE); THOMFORDE, Claudia, 38542 Leiferde (DE); KNEUSSEL, Ewald, 30890 Barsinghausen (DE); WENDE, Henrik, 03172 Schenkendöbern OT Sembten (DE); ELSEN, Patrick, L-5312 Contern (LU)
(74) Vertreter: Widjaja, Wira
(86) Internationale Anmeldenummer: PCT/EP2012/055276
(87) Internationale Veröffentlichungsnummer: WO 2012/156135

(56) Entgegenhaltungen:
- EP-A2- 0 997 263
- WO-A1-2006/003054
- WO-A1-2009/070019
- US-A- 3 950 212

## Beschreibung

Die Erfindung betrifft ein Verfahren zur Herstellung eines Fahrzeugreifens gemäß dem Oberbegriff des Anspruches 1.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.

Der sogenannten Lageumschlag erfolgt bei herkömmlichen Herstellungsverfahren, entweder auf der Karkasstrommel oder auf der nachfolgenden Bombiertrommel. Dadurch wird die Flexibilität bei der Herstellung von unterschiedlichen Reifenkonstruktionen eingeschränkt.

Ein Verfahren gemäß dem Oberbegriff des Anspruches 1 ist aus der EP 0 997 263 A2 bekannt. Bei dem auf zwei Stufen, und zwar einer Karkasstrommel und einer Bombiertrommel, ablaufenden Verfahren werden die Seitenwandprofile um seitlich der Bombiertrommel positionierte Bälge gewickelt, ihre Enden werden anschließend miteinander verbunden. Aus der WO 2006/003054 A1 ist ein Verfahren zum Aufbau eines Radialreifens bekannt, bei dem eine expandierbare Karkasstrommel seitlich angeordnete expandierbare Balgträger aufweist, welche zum Auflegen und Spleißen von Reifenbauteilen expandiert werden, sodass die Außenflächen der Bälge gemeinsam mit der Außenfläche der expandierten Karkasstrommel zumindest im Wesentlichen eine einheitliche zylindrische Auflagefläche bilden. Auf diese Weise werden die Innenschicht und die Seitenwandprofile bei expandierten Balgträgern aufgelegt und gespleißt. Die US 3,950,212 A offenbart eine Reifenaufbaumaschine mit einer expandierbaren Reifenaufbautrommel mit separaten und speziell bewegbaren Kernsetzeinrichtungen. Die WO 2009/070019 A1 offenbart eine Reifenaufbautrommel, die mit einer speziellen Vorrichtung zum Positionieren der Seitenwände auf die bereits expandierte Reifenkarkasse aufweist.

Der Erfindung liegt die Aufgabe zugrunde, ein Verfahren bereitzustellen, mit dem ein Fahrzeugreifen auf einfache Weise hergestellt werden kann.

Eine weitere Aufgabe besteht darin, eine hohe Flexibilität bei der Herstellung von unterschiedlichen Reifenkonstruktionen zu gewährleisten.

Gelöst wird die Aufgabe gemäß Anspruch 1 dadurch, dass vor Schritt e) die Seitenwände auf einer separaten Seitenwandtrommel vorkonfektioniert und anschließend mit einer Seitenwandtransfer-Einheit auf der Bombiertrommel angeordnet werden.

Ein Vorteil des erfindungsgemäßen Verfahrens besteht darin, dass es sich durch eine hohe Flexibilität bei der Herstellung von unterschiedlichen Reifenkonstruktionen auszeichnet. Mit dem Verfahren können insbesondere Reifenkonstruktionen mit einer sogenannten C-Lagenkonstruktion hergestellt werden, bei dem ein Teil der Karkasseinlage bis in den Bereich unter dem Gürtellaufstreifenpaket angeordnet wird. Durch die hohe Flexibilität des Verfahrens ist es ebenfalls möglich, einen Teil der Seitenwand entweder über dem Gürtellaufstreifenpaket oder unter dem Gürtellaufstreifenpaket anzuordnen. Darüber hinaus wird die Zykluszeit an der Bombiertrommel erheblich reduziert.

In einer vorteilhaften Weiterbildung der Erfindung ist vorgesehen, dass bei Schritt a) nach dem Aufwickeln der Karkasseinlagen ein mittlerer Teil der Karkasstrommel expandiert und seitlich der gebildeten Absätze der Karkasstrommel die Reifenkerne positioniert werden. Dadurch können die Reifenkerne an einer exakten Position auf der Reifenkarkasse angeordnet werden.

In einer weiteren vorteilhaften Weiterbildung der Erfindung ist vorgesehen, dass bei Schritt a) nach dem Positionieren der Reifenkerne die beiden Einlagenenden mit Rollenhebeln um die Reifenkerne herumgeschlagen werden. Auf diese Weise werden die Enden der Karkasseinlagen fest um die Reifenkerne herumgeschlagen.

In einer weiteren vorteilhaften Weiterbildung der Erfindung ist vorgesehen, dass vor Schritt e) die Seitenwände bereits auf der Bombiertrommel im Bereich der Segmente für die Kernklemmung angeordnet sind. Auf diese Weise können bestimmte Reifenkonstruktionen hergestellt werden, die mit herkömmlichen Verfahren nicht möglich sind.

In einer weiteren vorteilhaften Weiterbildung der Erfindung ist vorgesehen, dass bei Schritt e) die Seitenwände durch die Kernklemmung mit den Segmenten der Bombiertrommel fest mit der Reifenkarkasse im Bereich der Reifenkerne verbunden werden. Bei diesem Verfahrensschritt expandieren die Segmente für die Kernklemmung in radialer Richtung und verbinden dadurch die aufliegenden Seitenwände fest mit der koaxial angeordneten Reifenkarkasse.

In einer weiteren vorteilhaften Weiterbildung der Erfindung ist vorgesehen, dass nach Schritt f) die Seitenwände auf der Bombiertrommel mit Hochschlagmitteln um die Reifenkerne herumgeschlagen werden. Dadurch werden die Seitenwände im Bereich des Reifenwulstes fest mit der Reifenkarkasse verbunden.

In einer weiteren vorteilhaften Weiterbildung der Erfindung ist vorgesehen, dass nach dem Hochschlagen der Seitenwände das Gürtel-Laufstreifen-Paket koaxial zur Bombiertrommel angeordnet und beim Bombiervorgang die Reifenkarkasse mit dem Gürtel-Laufstreifen-Paket vereinigt wird, wobei ein Teil der Seitenwand unter dem Laufstreifen angeordnet werden kann. Auf diese Weise wird eine Reifenkonstruktion ermöglicht, bei der die Seitenwand zwischen der Reifenkarkasse und dem darüber liegenden Gürtellaufstreifenpaket angeordnet ist.

In einer weiteren vorteilhaften Weiterbildung der Erfindung ist vorgesehen, dass bei Schritt g) die Seitenwand nach dem Bombiervorgang hochgeschlagen wird, wobei ein Teil der Seitenwand über dem Laufstreifen angeordnet werden kann. Auf diese Weise lässt sich diese Art der Reifenkonstruktion relativ einfach herstellen.

In einer weiteren vorteilhaften Weiterbildung der Erfindung ist vorgesehen, dass die Hochschlagmittel an der Bombiertrommel in Form einer Vielzahl von Rollenhebeln ausgebildet sind. Dadurch lassen sich die Seitenwände relativ schnell und mit einer hohen Genauigkeit hochschlagen.

In einer weiteren vorteilhaften Weiterbildung der Erfindung ist vorgesehen, dass bei Schritt b) das Fertigstellen der Reifenkarkasse auf der Karkasstrommel ohne einen Lagenumschlag erfolgt.

Dadurch ist es ebenfalls möglich, Reifenkonstruktionen mit einem herkömmlichen Verfahren herzustellen.

Anhand mehrerer Ausführungsbeispiele soll die Erfindung näher erläutert werden. Es zeigen:
- Fig. 1a:: die Bombiertrommel,
- Fig 1b:: die Karkasstrommel,
- Fig 2 bis Fig 4:: die Karkasstrommel, auf der der Lagenumschlag durchgeführt wird
- Fig 5 bis Fig 9:: die Bombiertrommel, auf der die Reifenkarkasse angeordnet wird und der Bombiervorgang durchgeführt wird.

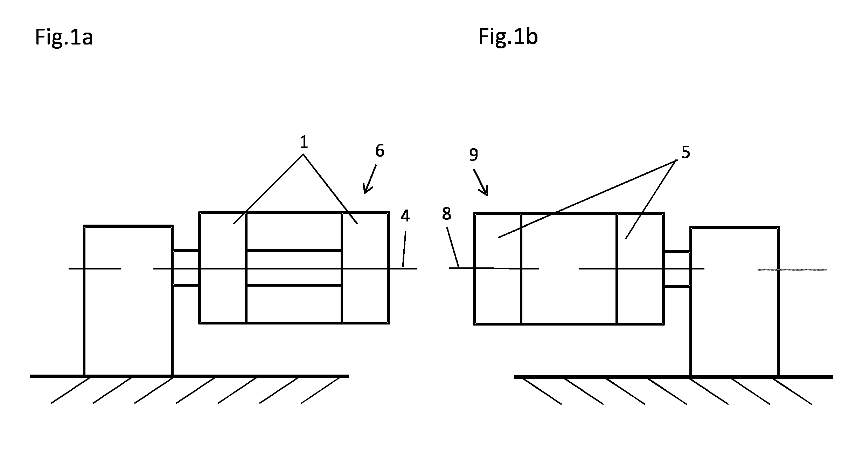

Die Fig. 1a zeigt die Bombiertrommel 6 mit der Trommelachse 4 und dem Mechanismus 1 zum Umschlagen bzw. Hochschlagen der Seitenwände.

Die Fig 1b zeigt die Karkasstrommel 9, auf der die Reifenkarkasse hergestellt wird. Die Karkasstrommel 9 rotiert um die Trommelachse 8 und weist einen separaten Mechanismus 5 zum Umschlagen der Enden der Karkasseinlagen auf.

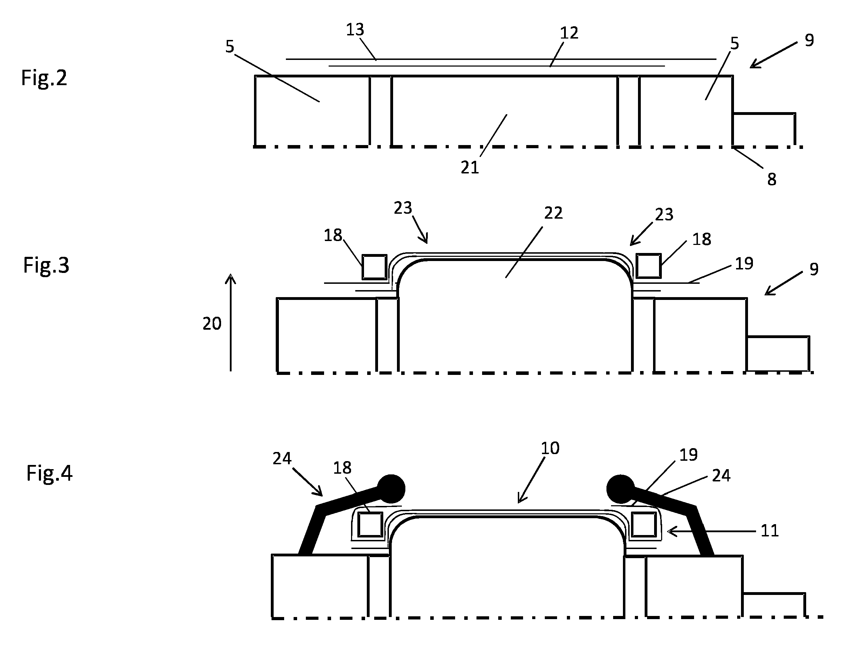

Die Fig. 2 zeigt die Karkasstrommel 9 mit der Trommelachse 8. Die Karkasstrommel 9 ist im Wesentlichen rotationssymmetrisch zur Trommelachse 8 aufgebaut, wobei zur vereinfachten Darstellung nur die obere Hälfte dargestellt ist.

Die Karkasstrommel 9 weist in der Mitte ein mittleres Teil 21 auf. Seitlich sind die beiden Mechanismen 5 zum Umschlagen der Karkasseinlagen angeordnet. Bei einem ersten Verfahrensschritt werden die erste Karkasseinlage 12 und die zweite Karkasseinlage 13 nacheinander auf der Karkasstrommel 9 aufgewickelt.

Die Fig. 3 zeigt den Verfahrensschritt, bei dem das mittlere Teil 22 der Karkasstrommel 9 in radialer Richtung 20 expandiert wurde. Dadurch werden 2 Absätze 23 zum Positionieren der Reifenkerne 18 gebildet. Die Reifenkerne 18 werden mit nicht dargestellten Kernsetzvorrichtungen an den gezeigten Positionen angeordnet.

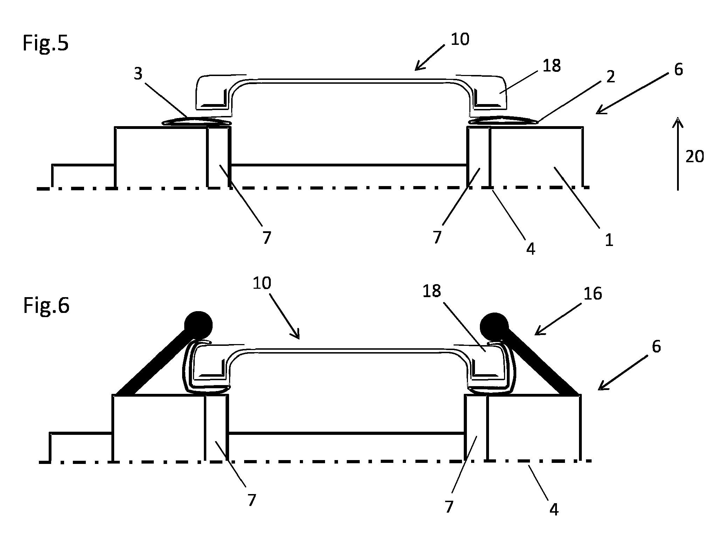

Die Fig. 4 zeigt den Verfahrensschritt, bei dem die Enden der Karkasseinlagen um den Kern 18 herumgeschlagen werden. Das Rumschlagen erfolgt mit einer Vielzahl von Rollenhebel 24, die fingerartig auseinandergefahren werden. Die Fig. 5 und 6 zeigen eine erste Ausführungsvariante, bei dem ein Teil der Seitenwand 2 und 3 unter dem Gürtellaufstreifenpaket angeordnet werden kann.

Die Reifenkarkasse 10 mit Lagenumschlag wurde mit einer nicht dargestellten Karkasstransfereinheit koaxial zur Bombiertrommel 6 angeordnet. Vorab wurde auf der Bombiertrommel 6 die rechte Seitenwand 2 und die linke Seitenwand 3 angeordnet. Die beiden Seitenwände 2 und 3 werden im Bereich der Segmente 7 für die Kernklemmung angeordnet. Die Seitenwände werden entweder auf einer separaten Seitenwandtrommel vorkonfektioniert oder als erstes Reifenaufbauteil auf der Bombiertrommel 6 aufgewickelt. In einem nachfolgenden Schritt expandieren die Segmente 7 in radialer Richtung 20 auseinander, so dass die aufliegenden Seitenwände 2 und 3 fest mit der Reifenkarkasse 10 verbunden werden. Der Mechanismus 1 zum Umschlagen bzw. Hochschlagen der Seitenwände 2 und 3 ist auf beiden Seiten der Bombiertrommel 6 angeordnet.

Die Fig. 6 zeigt die Bombiertrommel 6 mit den ausgefahrenen Rollenhebeln 16 zum Umschlagen der Seitenwände 2 und 3 um die Reifenkerne 18. In einem nachfolgenden, nicht dargestellten Verfahrensschritt wird das Gürtellaufstreifenpaket koaxial zur Reifenkarkasse 10 angeordnet und anschließend der Bombiervorgang eingeleitet.
Bei diesem Bombiervorgang wird das Gürtellaufstreifenpaket mit der Reifenkarkasse 10 vereinigt.

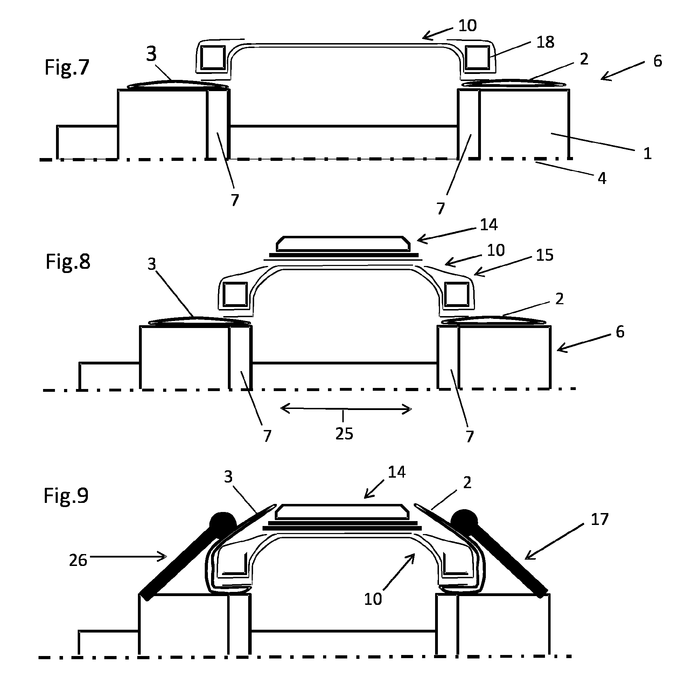

Die Figuren 7 bis 9 zeigt eine weitere Ausführungsvariante, bei der ein Teil der Seitenwand 2 und 3 über das Gürtellaufstreifenpaket 14 gelegt werden kann.
Die Figur 7 entspricht im Wesentlichen der Darstellung in der Fig. 5. Die Seitenwände 2 und 3 wurden in einem nicht dargestellten Verfahrensschritt als erstes auf der Bombiertrommel 6 appliziert. Anschließend wird die Reifenkarkasse 10 koaxial zur Bombiertrommel 6 angeordnet und die Seitenwände 2 und 3 mit der Reifenkarkasse 10 verbunden. Das Verbinden der Seitenwände 2 und 3 mit der Reifenkarkasse 10 erfolgt über ein radiales Expandieren der Segmente 7.

Die Fig. 8 zeigt den Verfahrensschritt, bei dem das Gürtellaufstreifenpaket 14 koaxial zur Bombiertrommel 6 positioniert wurde und über einen Bombiervorgang die Reifenkarkasse 10 mit dem Gürtellaufstreifenpaket 14 vereinigt wurde. Bei diesem Bombiervorgang werden die Segmente 7 für die Kernklemmung in axialer Richtung 25 zusammengefahren.

Die Fig. 9 zeigt den Verfahrensschritt, bei dem die Rollenhebel 17 zum Hochschlagen der Seitenwände 2 und 3 in radialer Richtung auseinander klappen. Dabei werden die Seitenwände 2 und 3 an der Reifenkarkasse 10 hochgeschlagen, so dass ein Teil der Seitenwände 2 und 3 über das Gürtellaufstreifenpaket 14 angeordnet werden kann.
Die Fertigstelltung des Reifenrohlings 26 erfolgt dann mit einem konventionellen Verfahren.

### Bezugszeichenliste

### (ist Teil der Beschreibung)

- 1: Mechanismus zum Umschlagen bzw. Hochschlagen der Seitenwände
- 2: Rechte Seitenwand
- 3: Linke Seitenwand
- 4: Trommelachse der Bombiertrommel
- 5: Mechanismus zum Umschlagen der Karkasseinlagen
- 6: Bombiertrommel
- 7: Segmente für Kernklemmung
- 8: Trommelachse der Karkasstrommel
- 9: Karkasstrommel
- 10: Reifenkarkasse mit Lagenumschlag
- 11: Lagenumschlag mit Kern
- 12: erste Karkasseinlage
- 13: zweite Karkasseinlage
- 14: Gürtellaufstreifenpaket
- 15: Bombiervorgang
- 16: Rollenhebel
- 17: Rollenhebel beim Hochschlagen der Seitenwände
- 18: Reifenkern
- 19: Ende der Karkasseinlage
- 20: radiale Richtung
- 21: mittleres Teil der Karkasstrommel
- 22: mittleres Teil der Karkasstrommel in radialer Richtung expandiert
- 23: Absätze zum Positionieren der Reifenkerne
- 24: Rollenhebel zum Umschlagen der Enden der Karkasseinlagen
- 25: axiales Zusammenfahren der Segmente
- 26: Reifenrohling

## Patentansprüche

1. Verfahren zur Herstellung eines Fahrzeugreifens mit einer Reifenkarkasse (10) mit einer Karkasseinlage (12, 13), Reifenwülsten mit Reifenkernen (18), einem Reifengürtel und einem Laufstreifen mit folgenden Schritten:
a) Aufwickeln von mindestens einer Karkasseinlage auf einer Karkasstrommel (9),
wobei die Karkasstrommel (9) eine Vorrichtung zum Setzen von Reifenkernen (18) und einen Mechanismus (5) zum Umschlagen der Karkasseinlage (12, 13) um einen Reifenkern (18) aufweist,
b) Fertigstellen der Reifenkarkasse (10) auf der Karkasstrommel (9)
c) Abnahme der Reifenkarkasse (10) von der Karkasstrommel (9) mit einer Karkasstranfereinheit,
d) Verfahren der Karkasstranfereinheit mit der Reifenkarkasse (10) über eine Bombiertrommel (6),
e) Durchführung einer Kernklemmung mit Segmenten (7) der Bombiertrommel (6),
wobei über diese Kernklemmung die anliegenden Seitenwände (2, 3) mit der Reifenkarkasse (10) im Bereich des Reifenwulstes an der Bombiertrommel (6) geklemmt werden,
f) Wegfahren der Karkasstransfereinheit von der Bombiertrommel (6),
g) Bombieren der Reifenkarkasse (10) mit den auf beiden Seiten angebundenen Seitenwänden (2, 3),
wobei die Seitenwände (2, 3) mit einem Hochschlagmittel (1) seitlich an der Reifenkarkasse (10) hochgeschlagen werden und die Reifenkarkasse (10)mit dem koaxial angeordneten Gürtel-Laufstreifen-Paket (14) vereinigt wird,
h) Fertigstellen des Reifenrohlings (26) mit einem konventionellen Herstellungsverfahren,
dadurch gekennzechnet, dass
vor Schritt e) die Seitenwände (2, 3) auf einer separaten Seitenwandtrommel vorkonfektioniert und anschließend mit einer Seitenwandtransfer-Einheit auf der Bombiertrommel (6) angeordnet werden.

2. Verfahren nach Anspruch 1,
**dadurch gekennzeichnet, dass**
bei Schritt a) nach dem Aufwickeln der Karkasseinlagen (12, 13) ein mittlerer Teil (22) der Karkasstrommel expandiert und seitlich der gebildeten Absätze (23) der Karkasstrommel (9) die Reifenkerne (18) positioniert werden.

3. Verfahren nach einem der vorhergehenden Ansprüche,
**dadurch gekennzeichnet, dass**
bei Schritt a) nach dem Positionieren der Reifenkerne (18) die beiden Einlagenenden (19) mit Rollenhebeln um die Reifenkerne (24) herumgeschlagen werden.

4. Verfahren nach einem der vorhergehenden Ansprüche,
**dadurch gekennzeichnet, dass**
vor Schritt e) die Seitenwände (2, 3) bereits auf der Bombiertrommel (9) im Bereich der Segmente (7) für die Kernklemmung angeordnet sind.

5. Verfahren nach einem der vorhergehenden Ansprüche,
**dadurch gekennzeichnet, dass**
bei Schritt e) die Seitenwände (2, 3) durch die Kernklemmung mit den Segmenten (7) der Bombiertrommel (9) fest mit der Reifenkarkasse (10) im Bereich der Reifenkerne verbunden werden.

6. Verfahren nach einem der vorhergehenden Ansprüche,
**dadurch gekennzeichnet, dass**
nach Schritt f) die Seitenwände (2, 3) auf der Bombiertrommel (9) mit Hochschlagmitteln (5) um die Reifenkerne herumgeschlagen werden.

7. Verfahren nach einem der vorhergehenden Ansprüche,
**dadurch gekennzeichnet, dass**
nach dem Hochschlagen der Seitenwände (2, 3) das Gürtel-Laufstreifen-Paket (14) koaxial zur Bombiertrommel (9) angeordnet und beim Bombiervorgang die Reifenkarkasse (10) mit dem Gürtel-Laufstreifen-Paket (14) vereinigt wird, wobei ein Teil der Seitenwand (2, 3) unter dem Laufstreifen angeordnet werden kann.

8. Verfahren nach einem der vorhergehenden Ansprüche,
**dadurch gekennzeichnet, dass**
bei Schritt g) die Seitenwand (2, 3) nach dem Bombiervorgang (15) hochgeschlagen wird, wobei ein Teil der Seitenwand (2, 3) über dem Laufstreifen angeordnet werden kann.

9. Verfahren nach einem der vorhergehenden Ansprüche,
**dadurch gekennzeichnet, dass**
die Hochschlagmittel (1) an der Bombiertrommel (6) in Form einer Vielzahl von Rollenhebeln (17) ausgebildet sind.

10. Verfahren nach einem der vorhergehenden Ansprüche,
**dadurch gekennzeichnet, dass**
bei Schritt b) das Fertigstellen der Reifenkarkasse auf der Karkasstrommel (9) ohne einen Lagenumschlag erfolgt.

## Claims

1. Method for producing a vehicle tire having a tire carcass (10) with a carcass insert (12, 13), tire beads with tire cores (18), a tire belt and a tread, comprising the following steps:
a) winding at least one carcass insert onto a carcass drum (9), wherein the carcass drum (9) has a device for setting tire cores (18) and a mechanism (5) for folding the carcass insert (12, 13) over a tire core (18),
b) finishing the tire carcass (10) on the carcass drum (9),
c) removing the tire carcass (10) from the carcass drum (9) using a carcass transfer unit,
d) moving the carcass transfer unit with the tire carcass (10) over a cambering drum (6),
e) carrying out a core clamping operation by means of segments (7) of the cambering drum (6), wherein the abutting side walls (2, 3) are clamped to the tire carcass (10) in the region of the tire bead on the cambering drum (6) by this core clamping operation,
f) moving the carcass transfer unit away from the cambering drum (6),
g) cambering the tire carcass (10) with the side walls (2, 3), which are attached on both sides, wherein the side walls (2, 3) are turned up laterally on the tire carcass (10) by a turning-up means (1), and the tire carcass (10) is combined with the coaxially arranged belt/tread package (14),
h) finishing the green tire (26) using a conventional production method,
**characterized in that**,
before step e), the side walls (2, 3) are prefabricated on a separate side wall drum and are then arranged on the cambering drum (6) by means of a side wall transfer unit.

2. Method according to Claim 1,
**characterized in that**,
in step a), after the winding on of the carcass inserts (12, 13), a central part (22) of the carcass drum is expanded, and the tire cores (18) are positioned laterally with respect to the offsets (23) formed on the carcass drum (9).

3. Method according to one of the preceding claims, **characterized in that**,
in step a), after the positioning of the tire cores (18), the two insert ends (19) are folded around the tire cores (24) by means of roller levers.

4. Method according to one of the preceding claims, **characterized in that**,
before step e), the side walls (2, 3) are already arranged on the cambering drum (9), in the region of the segments (7), for the core clamping operation.

5. Method according to one of the preceding claims, **characterized in that**,
in step e), the side walls (2, 3) are connected firmly to the tire carcass (10) in the region of the tire cores by the core clamping operation with the segments (7) of the cambering drum (9).

6. Method according to one of the preceding claims, **characterized in that**,
after step f), the side walls (2, 3) are folded around the tire cores on the cambering drum (9) by means of turning-up means (5).

7. Method according to one of the preceding claims, **characterized in that**,
after the turning up of the side walls (2, 3), the belt/tread package (14) is arranged coaxially with the cambering drum (9) and, during the cambering operation, the tire carcass (10) is combined with the belt/tread package (14), wherein part of the side wall (2, 3) can be arranged under the tread.

8. Method according to one of the preceding claims, **characterized in that**,
in step g), the side wall (2, 3) is turned up after the cambering operation (15), wherein part of the side wall (2, 3) is arranged above the tread.

9. Method according to one of the preceding claims, **characterized in that**
the turning-up means (1) are formed on the cambering drum (6) in the form of a multiplicity of roller levers (17).

10. The method according to one of the preceding claims,
**characterized in that**,
in step b), the finishing of the tire carcass on the carcass drum (9) takes place without folding over any plies.

## Revendications

1. Procédé de fabrication d'un pneumatique de véhicule avec une carcasse de pneumatique (10) dotée d'une nappe de carcasse (12, 13), de bourrelets de pneumatique avec des tringles de pneumatique (18), d'une ceinture de pneumatique et d'une bande de roulement, avec les étapes suivantes :
a) enroulement d'au moins une nappe de carcasse sur un tambour de carcasse (9) ;
le tambour de carcasse (9) comportant un dispositif de mise en place des tringles de pneumatique (18) et un mécanisme (5) de rabattement de la nappe de carcasse (12, 13) autour d'une tringle de pneumatique (18) ;
b) finition de la carcasse de pneumatique (10) sur le tambour de carcasse (9) ;
c) retrait de la carcasse de pneumatique (10) hors du tambour de carcasse (9) à l'aide d'une unité de transfert de carcasse ;
d) déplacement de l'unité de transfert de carcasse avec la carcasse de pneumatique (10) par le biais d'un tambour de bombement (6) ;
e) réalisation d'un coincement de tringle avec des segments (7) du tambour de bombement (6) ;
le coincement de tringle permettant de coincer les parois latérales (2, 3) connexes avec la carcasse de pneumatique (10) dans la région du bourrelet de pneumatique au niveau du tambour de bombement (6) ;
f) retrait de l'unité de transfert de carcasse hors du tambour de bombement (6) ;
g) bombement de la carcasse de pneumatique (10) avec les parois latérales (2, 3) raccordées sur les deux côtés ;
les parois latérales (2, 3) étant relevées en côté au niveau de la carcasse de pneumatique (10) à l'aide d'un moyen de relevage (1) et la carcasse de pneumatique (10) étant réunie avec le paquet ceinture-bande de roulement (14) disposé dans le plan coaxial ;
h) finition de l'ébauche de pneumatique (26) au moyen d'un procédé de fabrication conventionnel ;
**caractérisé en ce que** :
avant l'étape e), les parois latérales (2, 3) sont pré-confectionnées sur un tambour de paroi latérale séparé puis disposées sur le tambour de bombement (6) à l'aide d'une unité de transfert de paroi latérale.

2. Procédé selon la revendication 1, **caractérisé en ce que** lors de l'étape a), après l'enroulement des nappes de carcasse (12, 13), une partie centrale (22) du tambour de carcasse est expansée et les tringles de pneumatique (18) sont positionnées en côté des épaulements (23) formés du tambour de carcasse (9).

3. Procédé selon l'une quelconque des revendications précédentes, **caractérisé en ce que** lors de l'étape a), après le positionnement des tringles de pneumatique (18), les deux extrémités de nappe (19) sont entourées autour des tringles de pneumatique (24) à l'aide de leviers à galet.

4. Procédé selon l'une quelconque des revendications précédentes, **caractérisé en ce qu'**avant l'étape e), les parois latérales (2, 3) sont déjà disposées sur le tambour de bombement (9) dans la région des segments (7) pour coincer la tringle.

5. Procédé selon l'une quelconque des revendications précédentes, **caractérisé en ce que** lors de l'étape e), les parois latérales (2, 3) sont reliées fixement à la carcasse de pneumatique (10) dans la région des tringles de pneumatique en coinçant la tringle avec les segments (7) du tambour de bombement (9).

6. Procédé selon l'une quelconque des revendications précédentes, **caractérisé en ce qu'**après l'étape f), les parois latérales (2, 3) sont entourées sur le tambour de bombement (9) à l'aide de moyens de relevage (5) pour entourer les tringles de pneumatique.

7. Procédé selon l'une quelconque des revendications précédentes, **caractérisé en ce qu'**après le relevage des parois latérales (2, 3), le paquet ceinture-bande de roulement (14) est disposé dans le plan coaxial par rapport au tambour de bombement (9) et que lors du processus de bombement, la carcasse de pneumatique (10) est réunie avec le paquet ceinture-bande de roulement (14), une partie de la paroi latérale (2, 3) pouvant être disposée sous la bande de roulement.

8. Procédé selon l'une quelconque des revendications précédentes, **caractérisé en ce que** lors de l'étape g), la paroi latérale (2, 3) est relevée après le processus de bombement (15), une partie de la paroi latérale (2, 3) pouvant être disposée au-dessus de la bande de roulement.

9. Procédé selon l'une quelconque des revendications précédentes, **caractérisé en ce que** les moyens de relevage (1) sont réalisés au niveau du tambour de bombement (6) sous la forme d'une pluralité de leviers à galet (17).

10. Procédé selon l'une quelconque des revendications précédentes, **caractérisé en ce que** lors de l'étape b), la finition de la carcasse de pneumatique sur le tambour de carcasse (9) est effectuée sans entourage des couches.
